# EUROPEAN PATENT APPLICATION

(11) **EP 4 403 266 A1**
(43) Date of publication of application: **24.07.2024**
(21) Application number: 22869732.2
(22) Date of filing: 12.08.2022
(51) Int. Cl.: B05B 5/08, A01M 7/00, B05B 5/025

(54) **ELECTROSTATIC SPRAYING DEVICE**

(30) Priority: 16.09.2021 JP 2021151239
(71) Applicant: Arimitsu Industry Co., Ltd., Osaka-shi, Osaka 537-0001 (JP)
(72) Inventor: OMACHI, Kouji, Shiki-gun, Nara 636-0234 (JP); YAMASHITA, Yuki, Shiki-gun, Nara 636-0234 (JP); SAKAI, Masashi, Shiki-gun, Nara 636-0234 (JP)
(74) Representative: dompatent von Kreisler Selting Werner - Partnerschaft von Patent- und Rechtsanwälten mbB
(86) International application number: PCT/JP2022/030706
(87) International publication number: WO 2023/042585

(57) **Abstract**

Provided is an electrostatic spraying device capable of sufficiently charging a liquid. According to the present disclosure, there is provided an electrostatic spraying device equipped with a spray nozzle spraying a liquid, a support rod supporting the spray nozzle, and a charging section charging the liquid sprayed from the spray nozzle, the electrostatic spraying device comprising: a bottomed cylindrical outer cover (3) which is attached to the support rod; a cylindrical body (21) of which one end in an axial direction is attached to an inner surface of a bottom wall of the o uter cover (3); a truncated cylindrical water intrusion prevention portion (enlarged diameter portion (315)) which is provided in a middle portion of the cylindrical body (21) in the axial direction to surround the cylindrical body (21) in a circumferential direction and increases in diameter toward the other end of the cylindrical body (21) in the axial direction; and an inner cover (22) which is provided at the other end, covers the water intrusion prevention portion to surround the cylindrical body (21) in the circumferential direction, and opens toward the inner surface, wherein a member (insert nut (45) and bolt (46) , and the like) that constitutes a part of a power supply path to the charging section is held by the other end.

## Description

### [Technical Field]

The present disclosure relates to an electrostatic spraying device.

### [Background Art]

Conventionally, in order to spray a chemical solution (liquid) on a field, an electrostatic spraying device is used which includes a spray nozzle that sprays the chemical solution and a charging section that charges the chemical solution sprayed from the spray nozzle.

The chemical solution sprayed from the spray nozzle is charged with a polarity opposite to that of a voltage applied to an electrode. The charged chemical solution spreads toward the field, and evenly adheres to the crops planted in the field due to the electrostatic effect.

The electrostatic spraying device described in Patent Document 1 is a boom sprayer, and a plurality of spray nozzles are arranged in parallel in the longitudinal direction of a support rod (boom). A plurality of mounted portions are arranged in parallel along the longitudinal direction of the support rod. The charging section is a cable and is spanned between the plurality of mounted portions. Two charging sections or the outgoing path and the incoming path of one charging section are separated from each other with a spray area from the spray nozzle interposed therebetween. The charging section functions as an electrode.

### [Prior Art Document]

### [Patent Document]

[Patent Document 1] Japanese Patent Laid-Open Publication No. 2015-174035

### [Summary of Invention]

### [Problems to be Solved by Invention]

The charging section and the power supply path to the charging section are insulated from the ground. However, for example, when droplets of the chemical solution blown by the wind adhere to the surface of various parts of the electrostatic spraying device, a liquid film may be formed over a wide area. When the charging section or the power supply path to the charging section is electrically connected to the ground through the liquid film, the current that should flow to the charging section will pass through the liquid film and cause a ground fault. If the current that should flow through the charging section is grounded, the chemical solution cannot be sufficiently charged.

An object of the present disclosure is to provide an electrostatic spraying device capable of sufficiently charging a liquid.

### [Means for Solving Problems]

According to the present disclosure, there is provided an electrostatic spraying device equipped with a spray nozzle spraying a liquid, a support rod supporting the spray nozzle, and a charging section charging the liquid sprayed from the spray nozzle, the electrostatic spraying device comprising: a bottomed cylindrical outer cover which is attached to the support rod; a cylindrical body of which one end in an axial direction is attached to an inner surface of a bottom wall of the outer cover; a truncated cylindrical water intrusion prevention portion which is provided in a middle portion of the cylindrical body in the axial direction to surround the cylindrical body in a circumferential direction and increases in diameter toward the other end of the cylindrical body in the axial direction; and an inner cover which is provided at the other end, covers the water intrusion prevention portion to surround the cylindrical body in the circumferential direction, and opens toward the inner surface, wherein a member that constitutes a part of a power supply path to the charging section is held by the other end.

In the present disclosure, the middle portion of the cylindrical body in the axial direction is covered with the water intrusion prevention portion. The water intrusion prevention portion is covered with the inner cover so that the opening side faces the inside of the inner cover. The inner cover is covered with the outer cover so that the opening side faces the inside of the outer cover. That is, the middle portion of the cylindrical body in the axial direction is covered in three layers. Therefore, it is possible to prevent droplets blown by the wind from adhering to the middle portion of the cylindrical body in the axial direction.

The liquid tends to relatively easily adhere to the inner surface of the outer cover or the outer surface of the inner cover. However, the path from the inner surface of the outer cover to the middle portion of the cylindrical body in the axial direction along the outer surface of the water intrusion prevention portion is long and complicated. Similarly, the path from the outer surface of the inner cover to the middle portion of the cylindrical body in the axial direction along the inner surface of the inner cover is long and complicated. Therefore, it is possible to prevent droplets from flowing from the outer cover or the inner cover to the middle portion of the cylindrical body in the axial direction.

One end of the cylindrical body in the axial direction is attached to the outer cover. Since the outer cover is attached to the support rod, the liquid film formed on one end side of the cylindrical body can be electrically connected to the ground. Since a part of the power supply path to the charging section is held by the other end of the cylindrical body in the axial direction, the liquid film formed on the other end side of the cylindrical body can be electrically connected to the charging section or the power supply path to the charging section. Incidentally, since the liquid film is not formed on the middle portion of the cylindrical body in the axial direction, it is possible to prevent the charging section or the power supply path to the charging section from being electrically connected to the ground through the liquid film. Since the current that should flow through the charging section does not pass through the liquid film and causes a ground fault, the chemical solution can be sufficiently charged.

According to the present disclosure, there is provided the electrostatic spraying device, wherein the spray nozzle sprays downward, and wherein the outer cover opens downward.

In the present disclosure, since the outer cover opens downward, the inner cover opens upward and the water intrusion prevention portion opens downward. Since the spray nozzle sprays downward, droplets floating in the air are less likely to flow upward and less likely to enter the inside of the outer cover. Even if the droplets that have entered the inside of the outer cover enter the inside of the inner cover, they will not flow further upward and enter the inside of the water intrusion prevention portion. Therefore, there is no risk that the droplets will adhere to the inner surface of the water intrusion prevention portion or the middle portion of the cylindrical body in the axial direction.

According to the present disclosure, there is provided the electrostatic spraying device, wherein the inner cover is provided with a drain port.

In the present disclosure, since the inner cover is provided with the drain port, the liquid having entered the inside of the inner cover can be discharged to the outside of the inner cover through the drain port. Therefore, there is no risk that the liquid will be stored inside the inner cover and the middle portion of the cylindrical body in the axial direction will be submerged in water.

According to the present disclosure, there is provided the electrostatic spraying device, wherein a peripheral wall of the outer cover is dividable into a plurality of parts in the circumferential direction and is detachably attached to the bottom wall, and wherein the inner cover is dividable in the circumferential direction of the cylindrical body and is detachably attached to the cylindrical body.

In the present disclosure, the inside and outside of the outer cover can be easily cleaned and dried by disassembling the outer cover. Similarly, the inside and outside of the inner cover and the outer peripheral surface of the cylindrical body can be easily cleaned and dried by disassembling the inner cover.

### [Effects of Invention]

According to the electrostatic spraying device of the present disclosure, a liquid can be sufficiently charged.

### [Brief Description of Drawings]

FIG. 1 is a perspective view of an electrostatic spraying device according to an embodiment.
FIG. 2 is a schematic view of the electrostatic spraying device.
FIG. 3 is an enlarged perspective view of the electrostatic spraying device.
FIG. 4 is a cross-sectional view of a housing.
FIG. 5 is an exploded perspective view of the housing.
FIG. 6 is a perspective view illustrating an assembly of a housing.

### [Mode for Carrying out Invention]

Hereinafter, an embodiment of the present disclosure will be described.

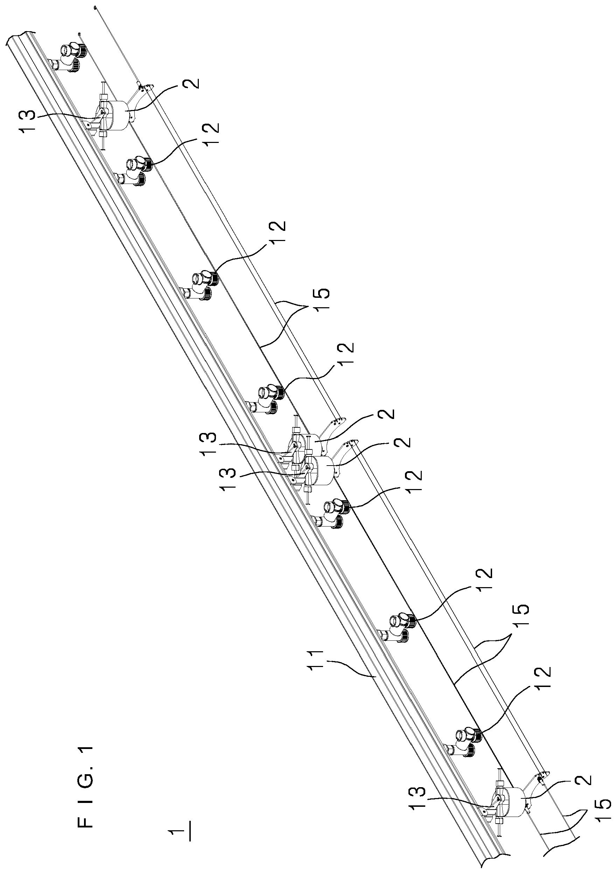

FIG. 1 is a perspective view of an electrostatic spraying device according to the embodiment.

In the figure, Reference Numeral 1 denotes an electrostatic spraying device and the electrostatic spraying device 1 includes a support rod 11, a plurality of spray nozzles 12, and a plurality of support fittings 13.

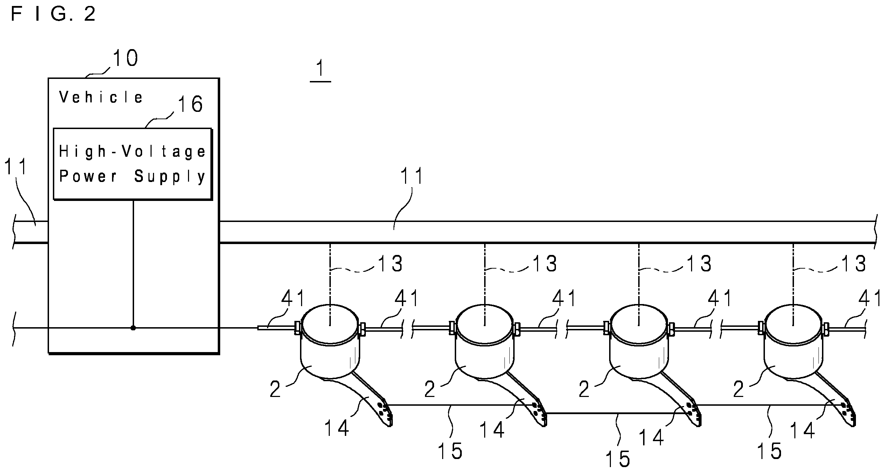

FIG. 2 is a schematic view of the electrostatic spraying device 1.

The electrostatic spraying device 1 of this embodiment includes two support rods 11. For example, two support rods 11 are provided to be respectively located on each side of the left and right sides of a vehicle 10, and move together with the vehicle 10.

As shown in FIG. 1, the spray nozzle 12 is provided inside the support rod 11. The plurality of spray nozzles 12 are arranged at appropriate intervals in the longitudinal direction of the support rod 11. A chemical solution (herbicide, plant growth regulator, or the like) is supplied to the spray nozzle 12 through a liquid supply path (not shown) provided inside the support rod 11. The spray nozzle 12 sprays the supplied chemical solution.

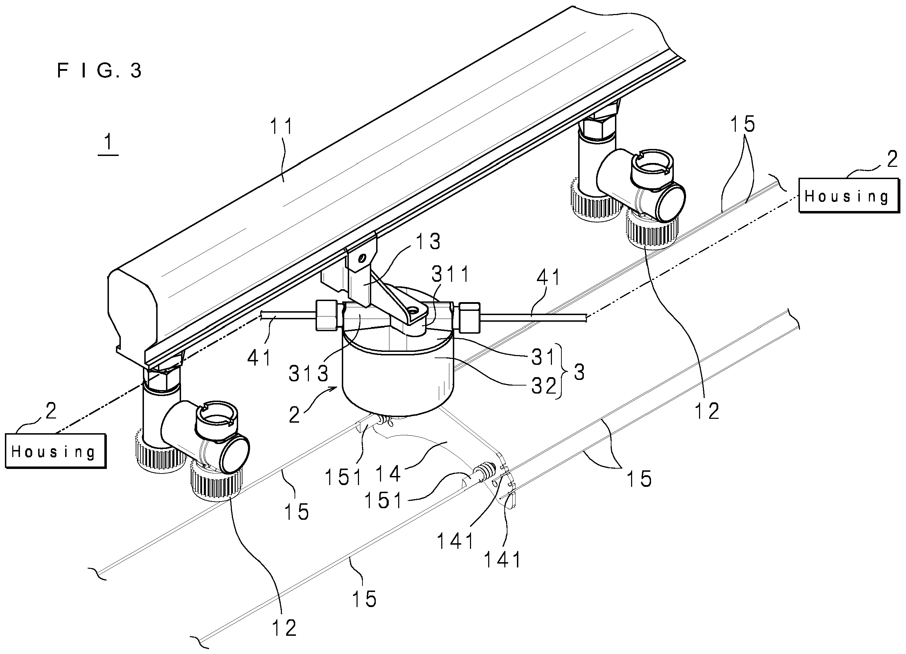

The support fitting 13 is provided on the support rod 11 with an appropriate separation distance from the spray nozzle 12 (see FIG. 3 described below). The plurality of support fittings 13 are arranged at appropriate intervals in the longitudinal direction of the support rod 11. The configuration of the support fitting 13 is not limited, but the support fitting 13 includes at least a portion attached to the support rod 11 and a portion attached to the housing 2 described below.

During use of the electrostatic spraying device 1, the support rod 11 is held, for example, in a horizontally extending manner. In this case, the spray direction of the spray nozzle 12 is downward. The attachment portion of the support fitting 13 to the housing 2 is located below the support rod 11. The vehicle 10 travels through the field with the support rod 11 passing above the crops, either by operator operation or remote control, or by automatic operation.

Hereinafter, the spray direction of the spray nozzle 12 is referred to as a downward direction, and the direction opposite to the spray direction of the spray nozzle 12 is referred to as an upward direction.

The electrostatic spraying device 1 includes a plurality of housings 2. The housing 2 has insulating properties and is made of, for example, synthetic resin.

FIG. 3 is an enlarged perspective view of the electrostatic spraying device 1.

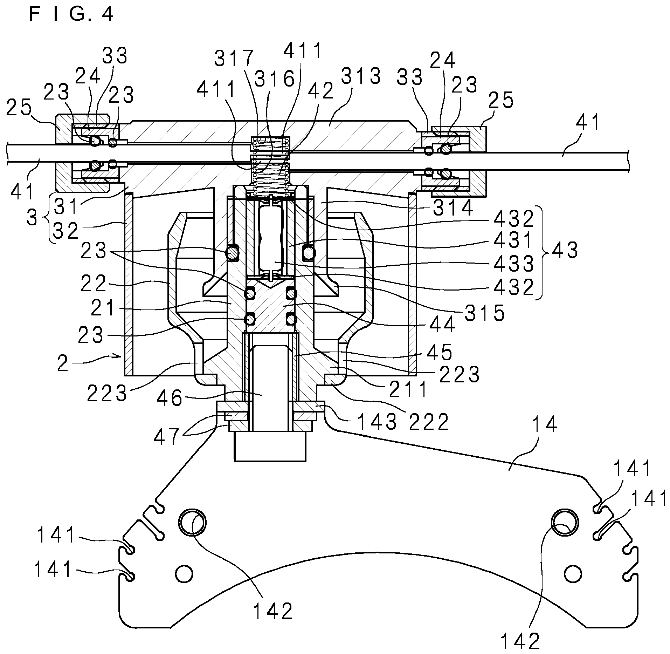

FIG. 4 is a cross-sectional view of the housing 2.

As shown in FIGS. 3 and 4, the housing 2 includes an outer cover 3, and the outer cover 3 has a cylindrical shape with a bottom. The outer cover 3 includes a disk-shaped bottom wall member 31 and a cylindrical peripheral wall member 32. The bottom wall member 31 constitutes the bottom wall of the outer cover 3 and the peripheral wall member 32 constitutes the peripheral wall of the outer cover 3.

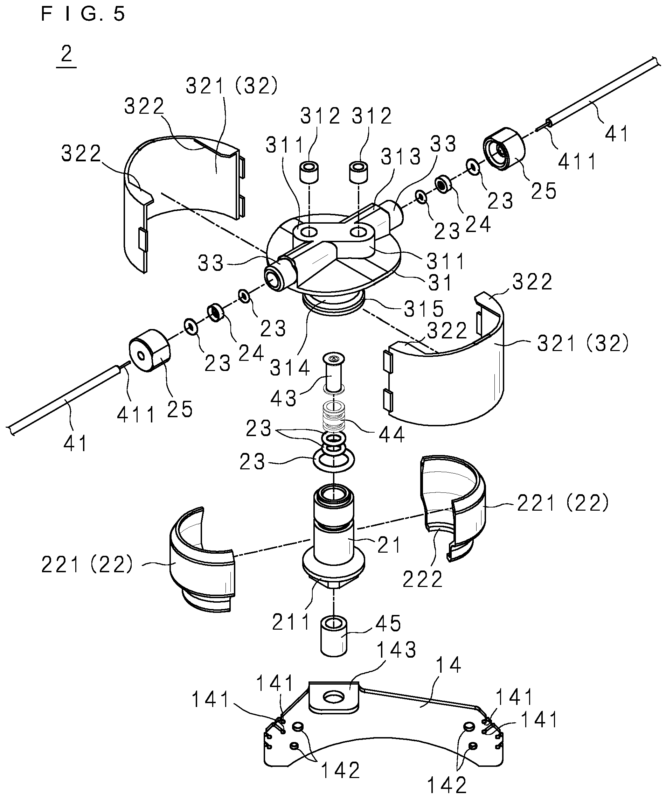

FIG. 5 is an exploded perspective view of the housing 2.

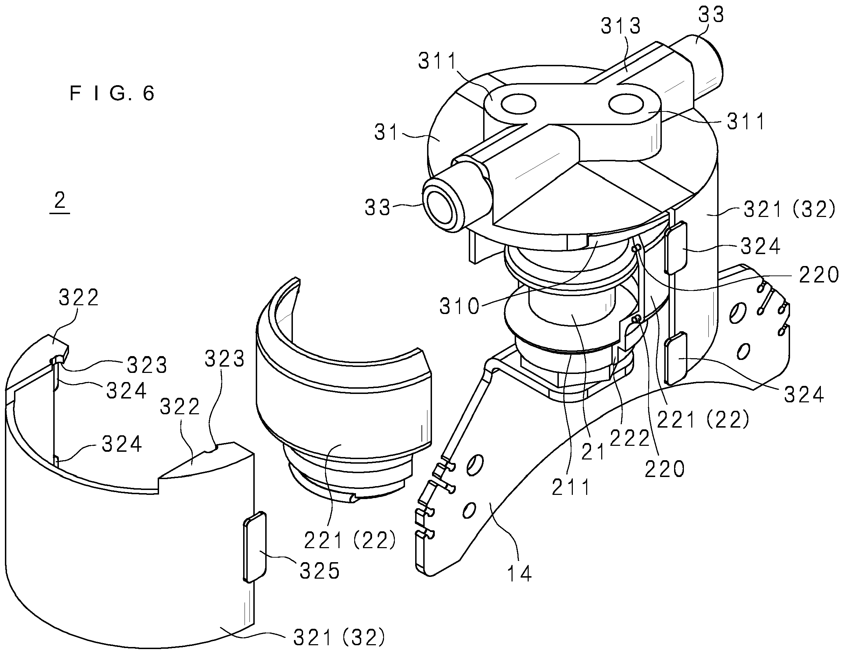

FIG. 6 is a perspective view illustrating an assembly of the housing 2.

As shown in FIGS. 5 and 6, a peripheral wall member 32 can be divided into two parts in the circumferential direction and is detachably attached to the bottom wall member 31.

The peripheral wall member 32 of this embodiment includes two semi-cylindrical members 321. The semi-cylindrical member 321 includes two engagement pieces 322 on the opening peripheral edge on one end side of the axial direction. The engagement piece 322 protrudes inward from the inner peripheral surface of the semi-cylindrical member 321.

As shown in FIG. 6, an engagement claw 323 is provided on the edge of the engagement piece 322.

An engaged recess 310 is provided on the peripheral edge of the bottom wall member 31 to correspond to the engagement piece 322 of the peripheral wall member 32. The inner surface of the engaged recess 310 is provided with an engaged claw (not shown) corresponding to the engagement claw 323 of the peripheral wall member 32.

When the engagement piece 322 is inserted into the engaged recess 310 and the engagement claw 323 detachably engages with the engaged claw of the inner surface of the engaged recess 310, the semi-cylindrical member 321 is detachably attached to the bottom wall member 31.

Each semi-cylindrical member 321 includes two clamping pieces 324 provided at one end in the circumferential direction and includes a clamped piece 325 provided at the other end in the circumferential direction. Two clamping pieces 324 are provided in parallel in the axial direction of the semi-cylindrical member 321. The separation distance between two clamping pieces 324 is the same as the length of the clamped piece 325 in the axial direction of the semi-cylindrical member 321.

Two semi-cylindrical members 321 attached to the bottom wall member 31 form the peripheral wall member 32 in such a manner that the clamped piece 325 of the other semi-cylindrical member 321 is inserted and sandwiched between two clamping pieces 324 of one semi-cylindrical member 321.

As shown in FIG. 3, the housing 2 is attached to the support rod 11 through the support fitting 13. In order to attach the housing 2 to the support rod 11, the outer cover 3 is attached to the support fitting 13 with the opening of the outer cover 3 facing downward.

As shown in FIG. 5, two bosses 311 are provided on the outer surface of the bottom wall member 31 of the outer cover 3 to be integrated with the bottom wall member 31 (see FIG. 3). The axial direction of the boss 311 is perpendicular to the outer surface of the bottom wall member 31. Two bosses 311 are arranged symmetrically about the center position of the bottom wall member 31. An insert nut 312 is coaxially fitted into the boss 311. The insert nut 312 is used when attaching the housing 2 to the support fitting 13 by a bolt (not shown).

As shown in FIGS. 3 to 5, a horizontal cylindrical portion 313 is integrally provided on the outer surface of the bottom wall member 31. The horizontal cylindrical portion 313 has a length which is substantially the same as the diameter of the bottom wall member 31 and extends to pass through the center position of the bottom wall member 31 along the outer surface of the bottom wall member 31.

As shown in FIGS. 4 and 5, a vertical cylindrical portion 314 is integrally provided on the inner surface of the bottom wall member 31. The vertical cylindrical portion 314 has a cylindrical shape and protrudes from the center of the bottom wall member 31 in a direction perpendicular to the bottom wall member 31 to be coaxial with the bottom wall member 31. The protrusion amount of the vertical cylindrical portion 314 from the bottom wall member 31 is about half of the protrusion amount of the peripheral wall member 32 from the bottom wall member 31.

A truncated cylindrical enlarged diameter portion 315 (water intrusion prevention portion) is provided at the tip of the vertical cylindrical portion 314 to be coaxial with the vertical cylindrical portion 314. The enlarged diameter portion 315 extends downward to increase in diameter from the opening peripheral edge of the vertical cylindrical portion 314.

As shown in FIG. 4, a communication hole 316 is provided in a portion surrounded by the vertical cylindrical portion 314 of the bottom wall member 31. The communication hole 316 allows the inside of the horizontal cylindrical portion 313 and the inside of the vertical cylindrical portion 314 to communicate with each other.

An accommodation recess 317 is provided on the inner peripheral surface of the horizontal cylindrical portion 313 to face the communication hole 316.

A path from the opening on one end side in the axial direction of the horizontal cylindrical portion 313 to the accommodation recess 317 is disposed on the inner surface side of the bottom wall member 31 in relation to a path from the opening on the other end side in the axial direction of the horizontal cylindrical portion 313 to the accommodation recess 317.

As shown in FIGS. 4 and 5, two cylindrical members 33 are coaxially provided in the horizontal cylindrical portion 313. One cylindrical member 33 is fixed to one end in the axial direction of the horizontal cylindrical portion 313 and the other cylindrical member 33 is fixed to the other end in the axial direction of the horizontal cylindrical portion 313. The boundary portion between the horizontal cylindrical portion 313 and the cylindrical member 33 is sealed, and the chemical solution will not enter from the boundary portion.

The housing 2 further includes a cylindrical body 21 and a cylindrical inner cover 22.

The cylindrical body 21 is attached to the inner surface of the bottom wall member 31 in such a manner that one end in the axial direction is coaxially fitted to the vertical cylindrical portion 314. A gap between the outer peripheral surface of the cylindrical body 21 and the inner peripheral surface of the vertical cylindrical portion 314 is watertightly sealed by an O-ring 23 fitted onto the cylindrical body 21.

An inner peripheral surface of the enlarged diameter portion 315 located at the distal end of the vertical cylindrical portion 314 functions as a guide surface when the cylindrical body 21 is fitted into the vertical cylindrical portion 314. The upper half of the cylindrical body 21 is disposed inside the vertical cylindrical portion 314 and the lower half of the cylindrical body 21 is located below the vertical cylindrical portion 314. The enlarged diameter portion 315 is located in the middle portion of the cylindrical body 21 in the axial direction to surround the cylindrical body 21 in the circumferential direction and increases in diameter toward the lower end of the cylindrical body 21.

The enlarged diameter portion 315 of this embodiment is integrally provided in the vertical cylindrical portion 314 and is provided in the middle portion of the cylindrical body 21 in the axial direction by fitting the cylindrical body 21 into the vertical cylindrical portion 314, but the present disclosure is not limited thereto. For example, the enlarged diameter portion may be integrally provided in the outer peripheral surface of the cylindrical body 21.

The inner cover 22 is attached to the other end of the cylindrical body 21 in the axial direction (that is, the lower end of the cylindrical body 21) to surround the cylindrical body 21 in the circumferential direction with the axial direction facing up and down. The upper opening of the inner cover 22 is directed toward the inner surface of the bottom wall member 31.

The inner cover 22 can be divided in the circumferential direction and is detachably attached to the cylindrical body 21.

As shown in FIGS. 5 and 6, the inner cover 22 of this embodiment includes two semi-cylindrical members 221. The semi-cylindrical member 221 includes a convex engagement portion 220 provided at one end in the circumferential direction and includes a concave engaged portion provided at the other end in the circumferential direction. Two semi-cylindrical members 221 form the inner cover 22 in such a manner that the engagement portion 220 of one semi-cylindrical member 221 is inserted and engaged with the engaged portion of the other semi-cylindrical member 221.

As shown in FIGS. 4 to 6, an engaged portion 211 is provided at the lower end of the cylindrical body 21 in order to attach the inner cover 22 to the cylindrical body 21. The engaged portion 211 protrudes outward from the outer peripheral surface of the cylindrical body 21. The engaged portion 211 is provided with a recess over the entire circumference.

On the other hand, an engagement portion 222 is provided at one end in the axial direction of the inner cover 22. The engagement portion 222 protrudes inward from the opening periphery of the inner cover 22. Each semi-cylindrical member 221 has a half of the engagement portion 222 in the circumferential direction.

By attaching two semi-cylindrical members 221 to each other so that the engagement portion 222 engages with the recess of the engaged portion 211 to form the inner cover 22, the inner cover 22 is attached to the lower end of the cylindrical body 21 to surround the cylindrical body 21 in the circumferential direction. The lower opening of the inner cover 22 is closed by the cylindrical body 21. The inner cover 22 covers the enlarged diameter portion 315 from the enlarged diameter portion 315 to the vicinity of the base end of the vertical cylindrical portion 314.

A plurality of drain ports 223 are provided in the peripheral wall of the inner cover 22 in parallel in the circumferential direction. The drain port 223 is separated downward from the enlarged diameter portion 315 by an appropriate distance. Furthermore, only one drain port 223 may be provided.

As shown in FIG. 4, two power supply lines 41 are drawn into the housing 2 in a watertight manner, and an elastic member 42 and an electrical resistance member 43 are respectively accommodated in a watertight manner. Further, the housing 2 accommodates a seal plug 44 and an insert nut 45.

For example, the seal plug 44 and the insert nut 45 each have conductivity and are made of metal.

The seal plug 44 has a columnar shape and is coaxially fitted into the cylindrical body 21. The seal plug 44 is disposed at the center of the cylindrical body 21 in the axial direction. A gap between the outer peripheral surface of the seal plug 44 and the inner peripheral surface of the cylindrical body 21 is watertightly sealed by the O-ring 23 fitted onto the seal plug 44.

The insert nut 45 is a fixing member of this embodiment and is coaxially fitted into the lower end of the cylindrical body 21. The upper end of the insert nut 45 is in contact with the lower end of the seal plug 44.

The electrical resistance member 43 includes an accommodation cylinder 431, two terminal members 432, and a resistor main body 433.

The accommodation cylinder 431 is an insulating cylinder, and is made of, for example, synthetic resin.

The terminal member 432 is a conductive disk, and is attached to the accommodation cylinder 431 to cover the openings at both ends of the accommodation cylinder 431.

The resistor main body 433 has a predetermined electrical resistance value (for example, 1 GΩ). The resistor main body 433 is a resistor, and is accommodated in the accommodation cylinder 431 so that its two connection terminals are connected to two terminal members 432. Furthermore, the resistor main body 433 may be a block made of conductive rubber or conductive resin. In this case, the resistor main body 433 is accommodated in the accommodation cylinder 431 to be in contact with each of two terminal members 432.

The electrical resistance member 43 is fitted into the upper end of the cylindrical body 21 so that the accommodation cylinder 431 is disposed coaxially with the cylindrical body 21. The lower terminal member 432 is in contact with the upper end of the seal plug 44.

The elastic member 42 has conductivity and is made of, for example, metal. The elastic member 42 of this embodiment is a coil spring, is disposed coaxially with the accommodation cylinder 431 of the electrical resistance member 43, and penetrates the communication hole 316. The elastic member 42 is disposed in a compressed state between the bottom surface of the accommodation recess 317 and the upper terminal member 432 of the electrical resistance member 43. The upper end of the elastic member 42 in the axial direction is accommodated in the accommodation recess 317 and is in elastic contact with the bottom surface of the accommodation recess 317. The lower end of the elastic member 42 in the axial direction is in elastic contact with the upper terminal member 432 of the electrical resistance member 43.

The power supply line 41 includes a strip-shaped conductor 411 and an insulator covering the entire length of the conductor 411. However, the conductor 411 is exposed at the end of the power supply line 41. The power supply line 41 is drawn into the horizontal cylindrical portion 313 of the bottom wall member 31 through the cylindrical member 33. The conductor 411 exposed at one end of the power supply line 41 is inserted into the elastic member 42. As a result, the elastic member 42 is in elastic contact with the conductor 411.

A gap between the outer peripheral surface of the power supply line 41 and the inner peripheral surface of the cylindrical member 33 is watertightly sealed. For example, the O-ring 23 is fitted onto the power supply line 41, a cylindrical seal member 24 is coaxially fitted into the cylindrical member 33, and the O-ring 23 is in elastic contact with the inner peripheral surface of the seal member 24.

In order to protect the O-ring 23 and the seal member 24, the cylindrical member 33 is covered with a cylindrical protective cap 25. A through-hole is provided in the bottom wall of the protective cap 25. The protective cap 25 is coaxially fitted onto the cylindrical member 33 while the power supply line 41 penetrates the through-hole of the protective cap 25.

In this way, the power supply line 41 is watertightly drawn into the inner space of the housing 2 and is electrically connected to the resistor main body 433 of the electrical resistance member 43.

The electrostatic spraying device 1 includes the same number of support members 14 as the number of housings 2. The support member 14 has conductivity, and is made of, for example, metal.

As shown in FIGS. 4 and 5, the support member 14 is a plate material that is long in one direction. The support member 14 is provided with a plurality of bare wire support portions 141 and a plurality of metal fitting support portions 142. The bare wire support portion 141 of this embodiment is a notch provided in the edge of the support member 14. The metal fitting support portion 142 of this embodiment is a through-hole penetrating the support member 14. The bare wire support portion 141 and the metal fitting support portion 142 are arranged at both ends of the support member 14 in the longitudinal direction.

The support member 14 is attached to the housing 2 to be electrically connected to the resistor main body 433 of the electrical resistance member 43.

In order to attach the support member 14 to the housing 2, the support member 14 is provided with, for example, an attachment plate 143. The attachment plate 143 perpendicularly protrudes from the edge of the support member 14 toward the support member 14. The attachment plate 143 is provided with a through-hole.

As shown in FIG. 4, the attachment plate 143 is attached to the lower end of the cylindrical body 21 in such a manner that a bolt 46 penetrating the through-hole of the attachment plate 143 from below is screwed into the insert nut 45. In this case, the support member 14 is disposed to be located below the attachment plate 143 so that the longitudinal direction is perpendicular to each of the longitudinal direction and the vertical direction of the support rod 11. Two washers 47 are interposed between the head of the bolt 46 and the attachment plate 143 of the support member 14. One washer 47 is a flat washer, and the other washer 47 is a spring washer.

The bolt 46 and the washer 47 each have conductivity, and are made of, for example, metal.

As shown in FIG. 3, the support fitting 13, the support member 14, and the housing 2 are sufficiently separated from the spray nozzle 12. Therefore, there is no risk that these will inhibit the spraying of the chemical solution from the spray nozzle 12 and there is no risk that the chemical solution that adheres to these will flow into the spray nozzle 12.

As shown in FIGS. 1 to 3, the electrostatic spraying device 1 includes a plurality of charging sections 15. The charging section 15 has a strip shape, and is, for example, a bare metal wire such as a stainless steel wire.

The charging section 15 is spanned between the plurality of support members 14 to extend in parallel to the support rod 11.

In this embodiment, each charging section 15 is spanned between two adjacent support members 14. One end of the charging section 15 is locked to the support member 14 through the bare wire support portion 141 of one support member 14. Similarly, the other end of the charging section 15 is locked to the other support member 14. Alternatively, a connection fitting 151 is provided at each of both ends of the charging section 15 and the connection fitting 151 is attached to the support member 14 through the metal fitting support portion 142 of the support member 14.

In this embodiment, two (or four) charging sections 15 are arranged one by one (or two at a time) separated from each other with a spray area (not shown) from the spray nozzle 12 interposed therebetween. The spray area has, for example, a cone shape or a fan shape with the apex of the spray nozzle 12 as the apex.

Furthermore, the charging section 15 may be spanned between three or more support members 14. Further, one charging section 15 may be disposed in a U shape and the outgoing path and the incoming path of the charging section 15 may be separated from each other with the spray area from the spray nozzle 12 interposed therebetween.

The charging section 15 is separated from the spray nozzle 12 by a distance in which the spraying of the chemical solution from the spray nozzle 12 is not disturbed and the chemical liquid attached to the charging section 15 does not flow into the spray nozzle 12. Further, the charging section 15 is disposed near the spray area of the spray nozzle 12 so that the chemical solution sprayed from the spray nozzle 12 can be sufficiently inductively charged.

As shown in FIG. 2, the electrostatic spraying device 1 includes a high-voltage power supply 16.

The high-voltage power supply 16 is mounted on the vehicle 10 and includes, for example, a battery that outputs a DC voltage, a booster circuit that boosts the output of the battery, and the like. The negative output terminal of the high-voltage power supply 16 is grounded via a ground wire (not shown). The positive output terminal of the high-voltage power supply 16 is connected to one end of the first power supply line 41.

The other end of the first power supply line 41 is drawn into the first housing 2 located at a position closest to the high-voltage power supply 16. One end of the second power supply line 41 different from the first power supply line 41 is drawn into the first housing 2 and is electrically connected to the other end of the first power supply line 41 inside the first housing 2 (see FIG. 4).

The other end of the second power supply line 41 is drawn into the second housing 2 adjacent to the first housing 2. One end of the third power supply line 41 different from the first and second power supply lines 41 is drawn into the second housing 2 and is electrically connected to the other end of the second power supply line 41 inside the second housing 2.

Similarly, the other end of the third power supply line 41 is drawn into the third housing 2.

Power is supplied from the power supply line 41 to the charging section 15 and the charging section 15 functions as a positive electrode for charging a chemical solution. As shown in FIG. 4, the power supply path from the power supply line 41 to the charging section 15 includes the elastic member 42, the electrical resistance member 43, the seal plug 44, the insert nut 45, the bolt 46, the washer 47, the attachment plate 143, and the support member 14.

Since the charging section 15 is not covered with an insulator and a current flows through the surface of the charging section 15, the chemical solution sprayed from the spray nozzle 12 is sufficiently charged.

Since each spray nozzle 12 faces downward, the chemical solution sprayed from the spray nozzle 12 is spread toward the crops. Since the charging section 15 is a positive electrode, a negative charge is given to the chemical solution sprayed from the spray nozzle 12. When a negative charge exists near a crop, the crop becomes polarized, for example, so that the upper and lower surfaces of the leaf are positive and the inside of the leaf is negative. For this reason, the negatively charged chemical solution is attracted to the crop and evenly adheres to both the upper and lower surfaces of the leaves.

Due to the electrical resistance of the electrical resistance member 43, the current flowing through the charging section 15 is weaker than the current flowing through the power supply line 41. Therefore, the shock caused by electric shock generated when a human touches the charging section 15 is suppressed. That is, the safety is high.

Since both the elastic member 42 and the conductor 411 of the power supply line 41 are watertightly accommodated in the housing 2, electrical leakage from the conductor 411 or the elastic member 42 through the chemical solution that has entered the housing 2 is prevented.

The charging section 15 and the power supply path to the charging section 15 are insulated from the ground. For example, even when a liquid film is formed over a wide area due to droplets of chemical solution blown by the wind adhering to the surface of various parts of the electrostatic spraying device 1, there is no risk that the current that should flow to the charging section 15 will pass through the liquid film and cause a ground fault. This reason will be described below.

The middle portion of the cylindrical body 21 in the axial direction is covered with the enlarged diameter portion 315. The enlarged diameter portion 315 is covered with the inner cover 22 so that the opening side faces the inside of the inner cover 22. The inner cover 22 is covered with the outer cover 3 so that the opening side faces the inside of the outer cover 3. That is, the middle portion of the cylindrical body 21 in the axial direction is covered in three layers. Therefore, it is possible to prevent droplets blown by the wind from adhering to the middle portion of the cylindrical body 21 in the axial direction.

The chemical solution tends to relatively easily adhere to the inner surface of the outer cover 3 or the outer surface of the inner cover 22. However, the path from the inner surface of the outer cover 3 to the middle portion of the cylindrical body 21 in the axial direction along the outer surface of the enlarged diameter portion 315 is long and complicated. Similarly, the path from the outer surface of the inner cover 22 to the middle portion of the cylindrical body 21 in the axial direction along the inner surface of the inner cover 22 is long and complicated. Therefore, it is possible to prevent droplets from flowing from the outer cover 3 or the inner cover 22 to the middle portion of the cylindrical body 21 in the axial direction.

In this embodiment, since the outer cover 3 opens downward, the inner cover 22 opens upward and the enlarged diameter portion 315 opens downward. Since the spray nozzle 12 sprays downward, droplets floating in the air are less likely to flow upward and less likely to enter the inside of the outer cover 3. Even if the droplets that have entered the inside of the outer cover 3 enter the inside of the inner cover 22, they will not flow further upward and enter the inside of the enlarged diameter portion 315. Therefore, there is no risk that the droplets will adhere to the inner surface of the enlarged diameter portion 315 or the middle portion of the cylindrical body 21 in the axial direction.

Further, since the inner cover 22 is provided with the drain port 223, the chemical solution having entered the inside of the inner cover 22 can be discharged to the outside of the inner cover 22 through the drain port 223. Therefore, there is no risk that the chemical solution will be stored inside the inner cover 22 and the middle portion of the cylindrical body 21 in the axial direction will be submerged in water. Furthermore, for example, it is conceivable to provide the drain port 223 in the form of a fine mesh in order to prevent the chemical solution from entering the inside of the inner cover 22 through the drain port 223.

Furthermore, the inside and outside of the outer cover 3 can be easily cleaned and dried by removing the peripheral wall member 32 from the bottom wall member 31. Similarly, the inside and outside of the inner cover 22 and the outer peripheral surface of the cylindrical body 21 can be easily cleaned and dried by removing the inner cover 22 from the cylindrical body 21 for disassembly.

Since the upper end of the cylindrical body 21 is attached to the outer cover 3 and the outer cover 3 is attached to the support rod 11 through the support fitting 13, the liquid film formed on the upper end side of the cylindrical body 21 can be electrically connected to the ground. Since a part (the insert nut 45, the bolt 46, the washer 47, and the support member 14) of the power supply path to the charging section 15 is held by the lower end of the cylindrical body 21, the liquid film formed on the lower end side of the cylindrical body 21 can be electrically connected to the charging section 15 or the power supply path to the charging section 15. Incidentally, since the liquid film is not formed on the middle portion of the cylindrical body 21 in the axial direction, it is possible to prevent the charging section 15 or the power supply path to the charging section 15 from being electrically connected to the ground through the liquid film. Since the current that should flow through the charging section 15 does not pass through the liquid film and causes a ground fault, the chemical solution can be sufficiently charged.

The embodiment disclosed herein is illustrative in all respects and should not be considered restrictive. The scope of the present disclosure is not intended to have the above-described meaning, but is intended to include meanings equivalent to the scope of the claims and all changes within the scope of the claims.

### [Description of Reference Numerals]

- 1: Electrostatic spraying device
- 3: Outer cover
- 11: Support rod
- 12: Spray nozzle
- 15: Charging section
- 21: Cylindrical body
- 22: Inner cover
- 223: Drain port
- 315: Enlarged diameter portion (water intrusion prevention portion)
- 45: Insert nut (member constituting a part of a power supply path to charging section)
- 46: Bolt (member constituting a part of a power supply path to charging section)
- 47: Washer (member constituting a part of a power supply path to charging section)

## Claims

1. An electrostatic spraying device equipped with a spray nozzle spraying a liquid, a support rod supporting the spray nozzle, and a charging section charging the liquid sprayed from the spray nozzle, the electrostatic spraying device comprising:
a bottomed cylindrical outer cover which is attached to the support rod;
a cylindrical body of which one end in an axial direction is attached to an inner surface of a bottom wall of the outer cover;
a truncated cylindrical water intrusion prevention portion which is provided in a middle portion of the cylindrical body in the axial direction to surround the cylindrical body in a circumferential direction and increases in diameter toward the other end of the cylindrical body in the axial direction; and
an inner cover which is provided at the other end, covers the water intrusion prevention portion to surround the cylindrical body in the circumferential direction, and opens toward the inner surface,
wherein a member that constitutes a part of a power supply path to the charging section is held by the other end.

2. The electrostatic spraying device according to claim 1,
wherein the spray nozzle sprays downward, and
wherein the outer cover opens downward.

3. The electrostatic spraying device according to claim 1 or 2,
wherein the inner cover is provided with a drain port.

4. The electrostatic spraying device according to any one of claims 1 to 3,
wherein a peripheral wall of the outer cover is dividable into a plurality of parts in the circumferential direction and is detachably attached to the bottom wall, and
wherein the inner cover is dividable in the circumferential direction of the cylindrical body and is detachably attached to the cylindrical body.
